# EUROPÄISCHE PATENTSCHRIFT

(11) **EP 3 315 718 B1**
(45) Veröffentlichungstag und Bekanntmachung des Hinweises auf die Patenterteilung: **29.01.2020**
(21) Anmeldenummer: 17197921.4
(22) Anmeldetag: 24.10.2017
(51) Int. Cl.: F01D 5/10, F01D 5/16, F01D 5/26, F01D 25/06

(54) **IMPULSKÖRPERMODUL MIT LAGESICHERUNG**
IMPULSE BODY MODULE WITH SECURE POSITION
MODULE DE CORPS À IMPULSIONS POURVU DE DISPOSITIF DE POSITIONNEMENT

(30) Priorität: 26.10.2016 DE 102016221069
(43) Veröffentlichungstag der Anmeldung: 02.05.2018
(73) Patentinhaber: MTU Aero Engines AG, 80995 München (DE)
(72) Erfinder: Schlemmer, Markus, 84048 Mainburg / Sandelzhausen (DE); Hartung, Andreas, 81829 München (DE); Rösele, Gerhard-Heinz, 86551 Aichach (DE); Pernleitner, Martin, 85221 Dachau (DE); Schill, Manfred, 81827 München (DE); Feldmann, Manfred, 82223 Eichenau (DE); Ehrenberg, Adrian, 85778 Haimhausen (DE)

(56) Entgegenhaltungen:
- EP-A1- 2 996 110
- EP-A1- 3 020 922
- US-A1- 2002 030 315

## Beschreibung

Die vorliegende Erfindung betrifft ein Impulskörpermodul für eine Strömungsmaschine, insbesondere eine Turbinenstufe einer Gasturbine, umfassend: ein einstückig ausgebildetes Aufnahmebauteil mit einer Basis und an der Basis umlaufend angeordneten Seitenwänden, wobei die Seitenwände und die Basis einen Aufnahmeraum begrenzen, ein einstückig ausgebildetes Einsatzbauteil das in den Aufnahmeraum des Aufnahmebauteils eingesetzt ist, wobei das Aufnahmebauteil und das darin aufgenommene Einsatzbauteil derart ausgebildet sind, dass sie gemeinsam mehrere voneinander getrennte Hohlräume begrenzen, und wobei in jedem Hohlraum ein Impulskörper, insbesondere eine Kugel, aufgenommen ist, und ein einstückig ausgebildetes Verschlussbauteil, das materialschlüssig mit dem Aufnahmebauteil verbunden ist, derart dass der Aufnahmeraum verschlossen ist und das Einsatzbauteil vom Aufnahmebauteil und dem Verschlussbauteil umgeben ist. Als Verfahren zur Schaffung der materialschlüssigen bzw. stoffschlüssigen Verbindung kommen zum Beispiel neben herkömmlichem Schweißen auch generative Verfahren, wie insbesondere Laserschmelzverfahren, in Betracht.

Schaufelanordnungen, insbesondere Laufschaufelanordnungen, von Gasturbinen neigen aufgrund ihrer Elastizität und Anregung durch das sie umströmende Arbeitsfluid bzw. Gas und durch Vibrationen, zu Schwingungen. Dabei können Eigenfrequenzen der Schaufeln angeregt werden, wobei dabei entstehende Resonanzen zu einer Beschädigung der Gasturbine, insbesondere der Schaufelanordnung führen können.

Die Anmelderin hat zur Dämpfung, insbesondere zur sogenannten Verstimmung von Schwingungen gegenüber bisher üblichen dissipativen Reibdämpfern ein in der WO 2012/095067A1 offenbartes Konzept vorgeschlagen, bei dem Impulskörper in einer Laufschaufel die Schwingungen durch Stoßkontakte beeinflussen, insbesondere wenn die Frequenz nahezu die Eigenfrequenz erreicht. Ein weiteres Beispiel eines Impulskörpermoduls ist in EP 3 020 922 A1 offenbart.

Ferner hat die Anmelderin auch Konzepte für Gehäuse erarbeitet, in denen mehrere Impulskörper aufgenommen sind, und das Gehäuse samt Impulskörpern in einem entsprechenden Bauraum einer Laufschaufelanordnung befestigt wird. In diesem Zusammenhang wird insbesondere auch auf eine frühere Anmeldung DE 102016207874.7 hingewiesen, die bis zum Anmeldzeitpunkt der vorliegenden Anmeldung nicht veröffentlicht worden ist.

Ausgehend von den bekannten Impulskörpermodulen ist es Aufgabe der Erfindung ein Impulskörpermodul so weiterzubilden, dass der Einbau vereinfacht und die Lagesicherheit verbessert werden kann. Gemäß einem Aspekt betrifft die Erfindung ein Impulskörpermodul nach Anspruch 1.

Zur Lösung dieser Aufgabe wird vorgeschlagen, dass das Aufnahmebauteil im Bereich seiner Basis oder seines Verschlussbauteils wenigstens einen Basisvorsprung aufweist, der sich vom Aufnahmeraum weg erstreckt. Mittels eines solchen Basisvorsprungs kann insbesondere einem Herausfallen des Impulskörpermoduls aus einer Einbaulage entgegengewirkt werden. Ferner kann ein solcher Basisvorsprung auch als Sicherung gegen Verdrehen wirksam sein.

Der Basisvorsprung kann dabei entlang einer kurzen Seitenwand des Aufnahmebauteils angeordnet sein. Dabei kann das Impulskörpermodul bei weggedachtem Basisvorsprung eine im Wesentlichen quaderförmige Ausgestaltung aufweisen mit einer im Wesentlichen rechteckigen Grundfläche. Der Basisvorsprung bedeckt somit nur einen Teil der Grundfläche des Impulskörpermoduls bzw. der Basis oder des Verschlussbauteils.

Ferner kann der Basisvorsprung im Wesentlichen quaderförmig ausgebildet sein, vorzugsweise mit abgerundeten Eckbereichen beim Übergang zu der Basis oder zum Verschlussbauteil und beim Übergang zu seinem freien Ende. Alternativ können die Eckbereiche auch als geneigte Flächenabschnitte bzw. gebrochene Kanten ausgeführt sein. Derartige Eckbereiche vereinfachen insbesondere das Einführen des Impulskörpermoduls in eine entsprechende Vertiefung an einer Schaufelanordnung.

Das Impulskörpermodule kann im Bereich von zwei Ecken des Aufnahmebauteils zwei gleichartig oder unterschiedlich ausgebildete Basisvorsprünge aufweisen, zwischen denen ein Freiraum vorgesehen ist. Hierzu wird weiter vorgeschlagen, dass der eine Basisvorsprung ausgehend von der Basis bzw. dem Verschlussbauteil eine größere Höhe aufweist als der andere Basisvorsprung. Ferner kann der eine Basisvorsprung eine kleinere Querschnittsfläche aufweisen als der andere Basisvorsprung. Durch derartige Ausgestaltungen kann eine eindeutige Einbaulage des Impulskörpermoduls in einer entsprechend ausgebildeten, insbesondere komplementär ausgebildeten Vertiefung ermöglicht werden.

Alternativ zu einer Anordnung im Bereich einer Seitenfläche kann der Basisvorsprung auch in einem zentralen Bereich der Basis oder des Verschlussbauteils vorgesehen sein.

Es wird weiter vorgeschlagen, dass der Basisvorsprung eine Form aufweist, die komplementär zu einer Vertiefung in einer Schaufelanordnung einer Turbinenstufe ausgebildet ist. Eine Querschnittsfläche des Basisvorsprungs kann im Wesentlichen dreieckig oder rechteckig oder vieleckig ausgebildet sein. Bevorzug weist die Querschnittsfläche abgerundete Eckbereiche auf.

Bei dem Impulskörpermodul können das Aufnahmebauteil samt Basisvorsprung, das Einsatzbauteil und das Verschlussbauteil durch ein generatives Verfahren hergestellt sein, insbesondere durch ein selektives Laserschmelzverfahren.

Alternativ oder ergänzend kann auch daran gedacht werden, dass das Aufnahmebauteil samt Basisvorsprung oder/und das Einsatzbauteil oder/und das Verschlussbauteil wenigstens teilweise durch ein abtragendes Fertigungsverfahren, wie beispielsweise elektrochemisches Abtragen, oder durch ein Metallspritzgussverfahren hergestellt ist. Ein abtragendes Verfahren kann gegebenenfalls auch ergänzend oder im Anschluss an ein generatives Verfahren zum Einsatz kommen, etwa zum Glätten der Außenkontur des Impulskörpermoduls.

Gemäß einem weiteren Aspekt betrifft die Erfindung auch ein Verfahren zur Herstellung eines Impulskörpermoduls für eine Strömungsmaschine, insbesondere für eine Turbinenstufe einer Gasturbine, umfassend die Schritte nach Anspruch 10.

Die Erfindung betrifft auch eine Schaufelanordnung einer Verdichterstufe oder einer Turbinenstufe einer Gasturbine, wobei die Schaufelanordnung eine Vertiefung aufweist, in die ein oben beschriebenes Impulskörpermodul eingesetzt ist, wobei die Vertiefung vorzugsweise in einem Laufschaufelfußbereich oder einem Leitschaufelfußbereich vorgesehen ist.

Schließlich betrifft die Erfindung auch eine Gasturbine, insbesondere Fluggasturbine, umfassend mehrere Verdichterstufen und mehrere Turbinenstufen, wobei sie wenigstens ein oben beschriebenes Impulskörpermodul aufweist, das einer Verdichterstufe oder einer Turbinenstufe zugeordnet ist.

Nachfolgend wird die Erfindung unter Bezugnahme auf die anliegenden Figuren beispielhaft und nicht einschränkend beschrieben.
Fig. 1 zeigt ein Aufnahmebauteil eines bekannten Impulskörpermoduls in einer perspektivischen Ansicht (Fig. 1A) und einer Draufsicht (Fig. 1B).
Fig. 2 zeigt ein Einsatzbauteil für das Aufnahmebauteil der Fig. 1 in einer perspektivischen Darstellung.
Fig. 3 zeigt das Aufnahmebauteil der Fig. 1 mit eingesetztem Einsatzbauteil der Fig. 2 in einer perspektivischen Darstellung.
Fig. 4 zeigt das mittels eines Verschlussbauteils geschlossene Aufnahmebauteil.
Fig. 5 zeigt in den Teilfiguren A) und B) eine Ausführungsform eines Impulskörpermoduls mit einem Basisvorsprung.
Fig. 6 zeigt in den Teilfiguren A) und B) eine Ausführungsform eines Impulskörpermoduls mit zwei Basisvorsprüngen.

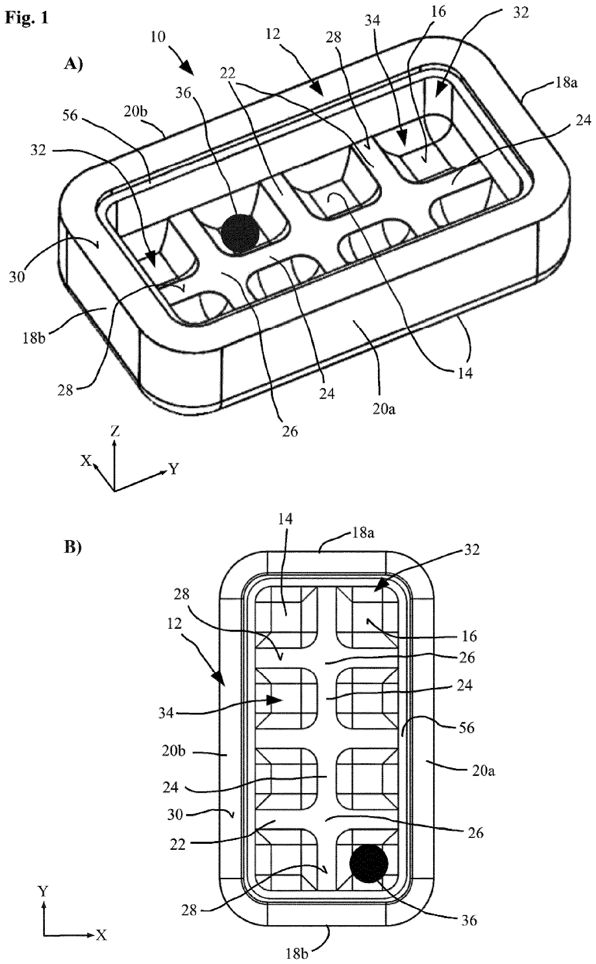

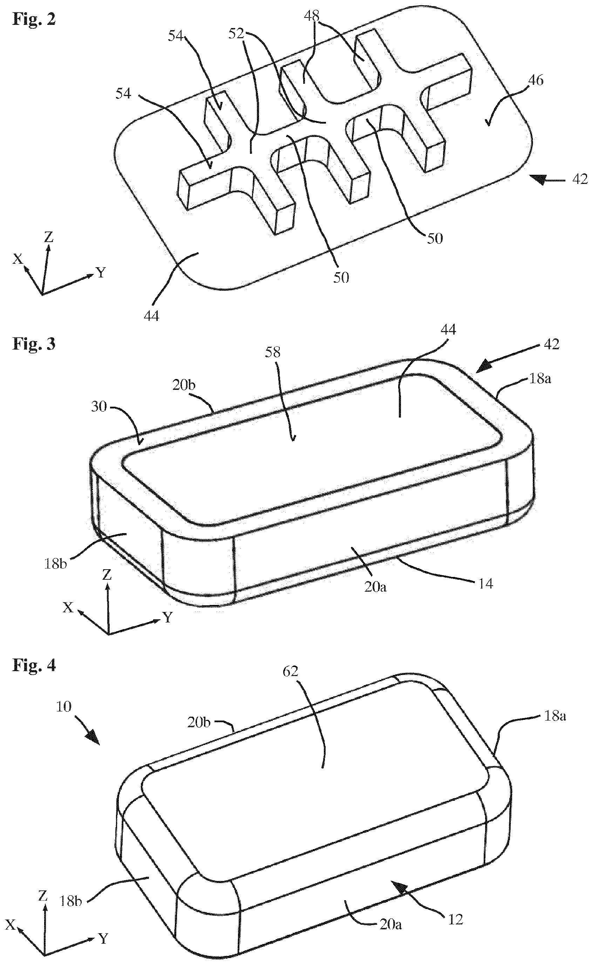

Ein bekanntes Impulskörpermodul, das die Grundlage für die im Rahmen dieser Anmeldung beschriebenen Erfindung darstellt, wird unter Bezugnahme auf die Figuren 1 bis 4 beschrieben. Die nachfolgenden Ausführungen unter Bezugnahme auf die Fig. 1A gelten auch für die Fig. 1B. Fig. 1A zeigt in einer perspektivischen Darstellung ein Aufnahmebauteil 12 eines Impulskörpermoduls 10, das in seinem gebrauchsfertigen Zustand in Fig. 4 dargestellt ist. Das Aufnahmebauteil 12 ist einstückig ausgebildet und weist eine Basis 14 auf, die man auch als Boden bezeichnen kann. Die Basis 14 weist eine sichtbare Innenfläche 16 auf und eine in den Figuren 1 bis 4 nicht sichtbare Außenfläche. Mit der Basis 14 sind Seitenwände 18a, 18b und 20a, 20b verbunden. Die Seitenwände 20a, 20b können als Längswände bezeichnet werden und die Seitenwände 18a, 18b können als Querwände bezeichnet werden. In der Draufsicht weist das Aufnahmebauteil 12 eine im Wesentlichen rechteckige Form auf, wobei die Ecken abgerundet oder abgeschrägt ausgebildet sein können. Für die Fig. 1 und alle weiteren Figuren wird das in Fig. 1 dargestellte Koordinatensystem verwendet, bei dem die X-Richtung der Querrichtung entspricht, die Y-Richtung der Längsrichtung entspricht und die Z-Richtung (orthogonal zur X- und Y-Richtung) einer Höhenrichtung entspricht. Dieses Koordinatensystem gilt sinngemäß auch für alle weiteren Figuren.

An der Basis 14 sind mehrere Streben 22, 24 vorgesehen, die von der Innenfläche 16 nach oben vorstehen, was in Fig. 2 einer orthogonalen Richtung zur Zeichnungsebene entspricht. Die Streben 22, 24 können auch als Rippen bezeichnet werden. Die Streben 24 verlaufen in Längsrichtung und können entsprechend auch als Längsstreben bezeichnet werden. Die Streben 22 verlaufen in Querrichtung und können entsprechend auch als Querstreben bezeichnet werden. Die Längsstreben 24 und die Querstreben 22 kreuzen sich in mehreren Kreuzungsbereichen 26. In der Fig. 2 blickt man auf die jeweiligen Stirnflächen 28 der Längsstreben 22 und der Querstreben 24. Die Stirnflächen 28 liegen auf einer Höhe bzw. einem Niveau, das tiefer liegt als der sichtbare stirnseitige Rand 30 der Seitenwände 18a, 18b, 20a, 20b. Die Basis 14 und die Seitenwände 18a, 18b, 20a, 20b begrenzen einen Aufnahmeraum 32. Durch die Längsstreben 24 und die Querstreben 22 sind im Aufnahmeraum 32 mehrere Hohlräume 34 bzw. Teilvolumen von Hohlräumen 34 gebildet. Durch die Längsstreben 24 und die Querstreben werden also zusammen mit der Basis 14 und den Seitenflächen 18a, 18b, 20a, 20b einzelne Kompartimente bzw. Teilkompartimente gebildet. Die Hohlräume 34 dienen der Aufnahme von einem jeweiligen Impulskörper 36, der insbesondere als Kugel ausgebildet sein kann. In den Fig. 1A und 1B ist jeweils beispielhaft nur ein Impulskörper 36 in einem Hohlraum 34 gezeigt. Tatsächlich weist das fertige Bauteil jedoch in jedem der in diesem Ausführungsbeispiel acht Hohlräume 34 jeweils einen Impulskörper, vorzugsweise in Form einer Kugel, auf.

Fig. 2 zeigt in einer perspektivischen Darstellung ein einstückig ausgebildetes Einsatzbauteil 42, das in das Aufnahmebauteil 12, insbesondere in dessen Aufnahmeraum 32 eingesetzt werden kann bzw. im gebrauchsfertigen Zustand eingesetzt ist. Das Einsatzbauteil weist in der ersten Ausführungsform eine Abschlusswand 44 auf. In der Fig. 2 blickt man auf die Innenseite 46 der Abschlusswand 44, wobei diese Innenseite 46 im zusammengesetzten Zustand der Innenfläche 16 der Basis 14 zugewandt ist. Das Einsatzbauteil 42 weist ebenfalls mehrere Streben 48, 50 auf, die an der Abschlusswand 44 angeordnet sind. Die Streben 48 bilden Querstreben und die Streben 50 bilden Längsstreben. Die Längsstreben 50 und die Querstreben 48 kreuzen sich in Kreuzungsbereichen 52. Die Längsstreben 50 und die Querstreben 48 weisen eine Stirnseite 54 auf. Wird das Einsatzbauteil 42 in das Aufnahmebauteil 12 (Fig. 1) eingesetzt, liegen die jeweiligen Stirnseiten 54 auf den Stirnflächen 28 auf. Hierdurch werden die in Fig. 1 dargestellten Hohlräume 34 geschlossen. Ein einzelner Hohlraum 34 wird dann durch die Basis 14, die Streben 22, 24 und die Seitenwände 18a, 18b, 20a, 20b des Aufnahmebauteils sowie durch die Abschlusswand 44 und die Streben 48, 50 des Einsatzbauteils 42 begrenzt. Die Abschlusswand 42 liegt dabei mit ihrer Innenseite 46 auf einem umlaufend angeordneten Innenrand 56 des Aufnahmebauteils 12 auf. Ferner weist die Abschlusswand 44 eine Umfangskontur auf, die komplementär zum Innenumfang der Aufnahmeöffnung 32 ausgebildet ist. Anders ausgedrückt wird der Aufnahmeraum 32 durch das Einsetzen des Einsatzbauteils 42 in das Aufnahmebauteil 12 formschlüssig abgedeckt bzw. verschlossen, so dass in den Hohlräumen 34 aufgenommene Impulskörper 36 sich nur noch innerhalb ihres jeweiligen Hohlraums 34 bewegen können.

Fig. 3 zeigt in einer perspektivischen Darstellung den Zustand, wenn das Einsatzbauteil 42 in das Aufnahmebauteil 12 eingesetzt ist. Aus dieser Darstellung ist ferner ersichtlich, dass eine Außenfläche 58 der Abschlusswand 44 im Wesentlichen bündig abschließt mit dem stirnseitigen Rand 30 der umlaufenden Seitenwände 18a, 18b, 20a, 20b. In diesem Zustand bilden der stirnseitige Rand 30 und die Abschlusswand 44 eine im Wesentlichen durchgehende Ebene bzw. Fläche.

Fig. 4 zeigt in einer perspektivischen Darstellung das fertige Impulskörpermodul 10, wobei das Aufnahmebauteil 12 mit dem eingesetzten Einsatzbauteil 42 (siehe Fig. 3) und den in den Hohlräumen 34 (Fig. 1) aufgenommenen Impulskörpern 36 (Fig. 1) durch ein Verschlussbauteil 62 verschlossen ist. Das Verschlussbauteil 62 kann auch als Deckel bezeichnet werden. Das Verschlussbauteil 62 ist zumindest mit den Seitenwänden 18a, 18b, 20a, 20b des Aufnahmebauteils 12 materialschlüssig verbunden. Es kann aber zusätzlich auch mit der Abschlusswand 44 (Fig. 3) des Einsatzbauteils 42 materialschlüssig verbunden sein.

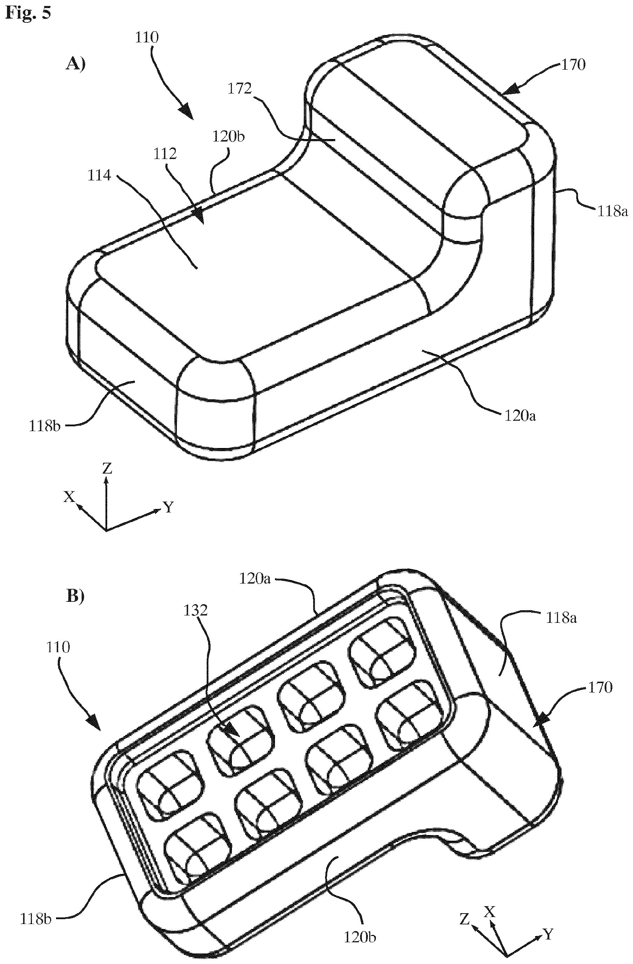

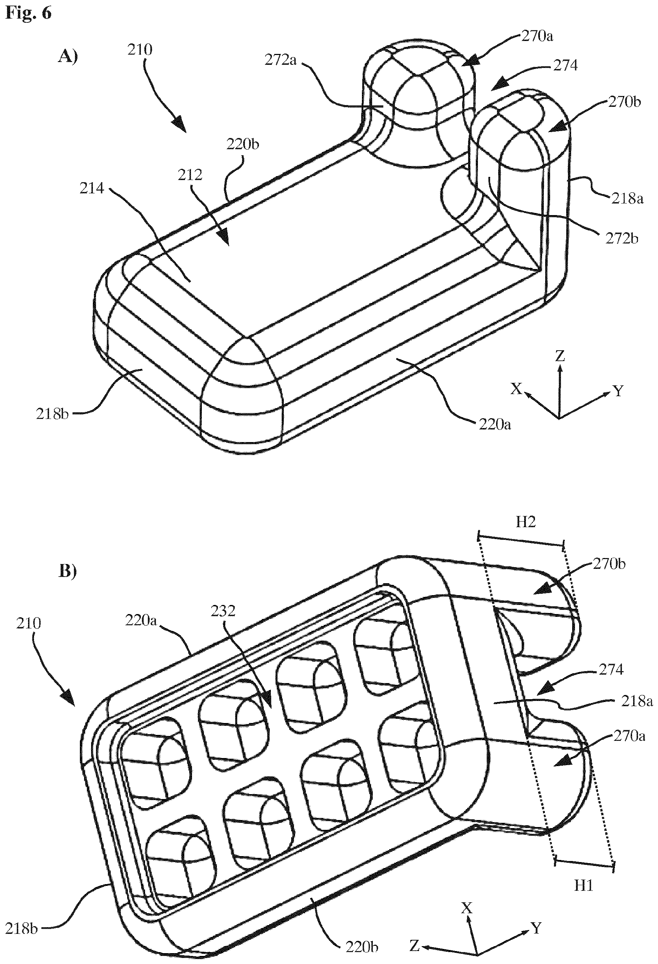

Nachdem unter Bezugnahme auf die Figuren 1 bis 4 das bereits bekannte Prinzip für den Aufbau eines Impulskörpermoduls vorgestellt worden ist, werden nun anhand der Fig. 5 und 6 zwei Ausführungsformen der vorliegenden Erfindung im Detail erläutert.

In Fig. 5A) ist ein Impulskörpermodul 110 in einer perspektivischen Ansicht auf das Aufnahmebauteil 112 mit der Basis 114 dargestellt. Das Impulskörpermodul 110 weist an seiner Basis 114 einen Basisvorsprung 170 auf. Der Basisvorsprung 170 ist entlang einer kurzen Seitenwand 118a ausgebildet. Im Bereich der langen Seitenwände 120a, 120b erstreckt sich der Basisvorsprung 170 nur teilweise. Der Basisvorsprung 170 ist bevorzugt einstückig mit der Basis 114 ausgebildet. Während der Basisvorsprung 170 im Bereich der Seitenwände 118a, 120a, 120b eine Verlängerung in Z-Richtung bildet, weist er im Bereich der Basis 114 eine Übergangswand 172 auf. Anders ausgedrückt kann auch gesagt werden, dass das Impulskörpermodul 110 mit dem Basisvorsprung 170 im Wesentlichen L-Förmig ausgebildet ist. Der Basisvorsprung 170 weist eine Stirnfläche 176 auf. Die Stirnfläche 176 bildet ein freies Ende des Basisvorsprungs 170. Der Basisvorsprung 170 dient insbesondere dazu, in einer entsprechend ausgebildeten Vertiefung aufgenommen zu werden, insbesondere formschlüssig aufgenommen zu werden, so dass das Impulskörpermodul 110 gegen Herausfallen oder/und gegen Verdrehen gesichert werden kann. Der Basisvorsprung 170 dient somit der Lagesicherung des Impulskörpermoduls 110 beim Einbau bzw. im eingebauten Zustand.

In Fig. 5B) ist das Impulskörpermodul 110 in einer perspektivischen Ansicht auf den Aufnahmeraum 132 dargestellt. Aus der Fig. 5B) ist ersichtlich, dass der Aufbau im Inneren des Impulskörpermoduls im Wesentlichen gleich ist wie der Aufbau des Impulskörpermoduls 10, das unter Bezugnahme auf die Figuren 1 und 2 detailliert beschrieben worden ist. Diese Beschreibung kann auch auf diese Ausführungsform des Impulskörpermoduls 110 sinngemäß angewandt werden, ohne dass dies hier nochmals wederholt werden soll. Aus der Fig. 5B) ist ferner ersichtlich, dass sich der Basisvorsprung 170 entlang der Z-Richtung weg vom Aufnahmeraum 132 erstreckt.

In Fig. 6A) ist ein Impulskörpermodul 210 in einer perspektivischen Ansicht auf das Aufnahmebauteil 212 mit der Basis 214 dargestellt. Das Impulskörpermodul 210 weist an seiner Basis 214 zwei Basisvorsprünge 270a, 270b auf. Die Basisvorsprünge 270a, 270b sind in Eckbereichen des Impulskörpermoduls 210 bzw. der Basis 214 angeordnet. Zwischen den beiden Basisvorsprüngen 270a, 270b ist ein Zwischenraum 274 gebildet. Bezogen auf die Z-Richtung weist der Basisvorsprung ausgehend von der Basis 214 eine geringere Ausdehnung bzw. Höhe H1 auf als Basisvorsprung 270b, der eine Höhe H2 aufweist (Fig. 5B). Aus der Fig. 6A) ist ferner ersichtlich, dass der kürzere Basisvorsprung 270a einen zur Z-Richtung orthogonal gemessenen Umfang aufweist, der größer ist als der Umfang des anderen Basisvorsprungs 270b. Anders ausgedrückt weist der Basisvorsprung 270a eine größere maximale Querschnittsfläche auf als der Basisvorsprung 270b. Die Basisvorsprünge 270a, 270b sind also unterschiedlich dimensioniert, auch wenn Sie eine ähnliche äußere Formgebung aufweisen. Die Basisvorsprünge 270a, 270b bilden im Bereich der Seitenwände 218a, 220a, 220b eine Verlängerung in Z-Richtung. Im Bereich der Basis 214 weisen sie eine jeweilige Übergangswand 272a, 272b auf. Anders ausgedrückt kann auch gesagt werden, dass das Impulskörpermodul 210 im Bereich der beiden Basisvorsprüngen 270a, 270b im Wesentlichen L-Förmig ausgebildet ist. Die Basisvorsprünge 270a, 270b weisen eine jeweilige Stirnfläche 276a, 276b auf. Die Stirnflächen 276a, 276b bilden ein jeweiliges freies Ende des betreffenden Basisvorsprungs 270a, 270b. Die Basisvorsprünge 270a, 270 dienen ebenfalls dazu, in einer entsprechend ausgebildeten Vertiefung aufgenommen zu werden, insbesondere formschlüssig aufgenommen zu werden, so dass das Impulskörpermodul 210 gegen Herausfallen oder/und gegen Verdrehen gesichert werden kann. Die Basisvorsprünge 270 dienen somit der Lagesicherung des Impulskörpermoduls 210 beim Einbau bzw. im eingebauten Zustand.

Das in den Fig. 1 bis 4 vorgestellte bekannte Impulskörpermodul 10 und die mit wenigstens einem Basisvorsprung 170, 270a, 270b ergänzten Impulskörpermodule 110, 210 der Fig. 5 und 6, insbesondere auch mit den jeweils einstückigen Komponenten Aufnahmebauteil 12, Einsatzbauteil 42 und Verschlussbauteil 62 werden bevorzugt mittels eines generativen Herstellungsverfahrens, insbesondere eines selektiven Laserschmelzverfahrens hergestellt. Dabei erfolgt das schichtweise Aufbauen des Aufnahmebauteils 12 beginnend mit einer ersten Schicht der Basis 14 (Fig. 1) bzw. des Basisvorsprungs 170 (Fig.5) bzw. des längeren Basisvorsprungs 270b (Fig. 6) in Höhenrichtung bzw. Z-Richtung. Das Einsatzstück 42 wird schichtweise aufgebaut ausgehend von einer ersten Schicht der Abschlusswand 44 in Höhenrichtung bzw. Z-Richtung (Fig. 2). Beim Einsetzen des einstückigen Einsatzbauteils 42 in die Aufnahmeöffnung 32 des Aufnahmebauteils 12 werden in die jeweiligen Hohlräume 34 die Impulskörper 36 eingesetzt. Ausgehend von einem Zustand gemäß Fig. 3, wird auf dem noch nicht ganz fertiggestellten Impulskörpermodul 10 mittels des generativen Verfahrens, insbesondere selektivem Laserschmelzverfahren, schichtweise das Verschlussbauteil 62 hergestellt. Dabei wird eine erste Pulverschicht auf die durch den stirnseitigen Rand 30 und die Außenseite 58 der Abschlusswand 44 gebildete durchgängige Fläche bzw. Ebene (Fig. 3) aufgebracht und dann materialschlüssig verbunden. Das so hergestellte Impulskörpermodul 10, 110, 210 weist somit eine einfach herstellbare und spannungsfrei geschlossene Struktur auf. Insbesondere treten auch keine unerwünschten Spannungen auf, wie dies bei konventionellen etwa durch Formschlussverbindung (Rastverbindung o.ä.) eingesetzte Deckel auftreten kann. Da für alle drei Komponenten, nämlich Aufnahmebauteil 12, Einsatzbauteil 42 und Verschlussbauteil 62 das gleiche Material verwendet wird und das gleiche Herstellungsverfahren eingesetzt wird, ergibt sich ein homogen aufgebautes Impulskörpermodul, bei dem die einzelnen Komponenten über gleiche (Material-)Eigenschaften verfügen.

Durch diese Art der Herstellung des Impulskörpermoduls 10, 110, 210 kann sichergestellt werden, dass die Impulskörper 36 luftdicht in ihren Hohlräumen 34 eingeschlossen sind und von außen kein Gas an sie herandringen kann. Dies insbesondere dann von besonderer Bedeutung, wenn das Impulskörpermodul 10, 110, 210 im Heißgasbereich der Strömungsmaschine, also zum Beispiel an einer Schaufelanordnung im Turbinenbereich der Strömungsmaschine verwendet werden soll. Durch das luftdichte Verschließen der Impulskörper 36 in den Hohlräumen 34 werden diese vor Verschleiß durch Heißgasoxidation und/oder Sulfidation geschützt.

Weiterhin erlaubt die zuvor beschriebene Herstellungsroute die Herstellung großer Stückzahlen zu geringen Kosten. Die Impulskörpermodule 10, 110, 210 sind verhältnismäßig klein. So beträgt die Abmessung ihrer längsten Seite, also die Seite in Längsrichtung bzw. Y-Richtung, in der Praxis je nach Anwendungsgebiet höchstens wenige Zentimeter, vorzugsweise weniger als zwei Zentimeter, stärker bevorzugt zwischen einem und 1,5 Zentimeter. Der Basisvorsprung 170, 207a, 270b (Fig. 5, 6) steht etwa 1 bis 10 Millimeter über die Außenfläche der Basis 114, 214 vor. Der Bauraum einer handelsüblichen SLM-Maschine bietet somit in der Regel ausreichend Platz, um mehrere Hundert Aufnahmebauteile 12 und mehrere Hundert Einsatzstücke 42 parallel herstellen zu können.

Bevorzugte Materialien für die Herstellung der Aufnahmebauteile 12, der Einsatzbauteile 42 und der Verschlussbauteil 62 können sein: Haynes 230, Inco 718, Hastelloy X, MARM 247, MARM 247 LLDS, MARM 509. Neben diesen bevorzugten Materialien können auch andere für generative Fertigungsverfahren geeignete Materialien verwendet werden.

Es wird darauf hingewiesen, dass die hier vorgestellten Ausführungsformen von Impulskörpermodulen 110, 210 mit einem oder mehreren Basisvorsprüngen 170, 270a, 270b nicht auf die dargestellten Ausgestaltungen beschränkt sind. Es ist beispielsweise auch denkbar, dass ein Basisvorsprung nicht im Bereich der Seitenwände vorgesehen ist, sondern in einem zentralen Bereich der Basis. Auch die Form der Querschnittsfläche (Schnitt in der X-Y-Ebene) der Basisvorsprünge 170, 270a, 270b kann verändert werden. Es ist beispielsweise denkbar, dass die Querschnittsfläche einem Dreieck oder einem Vieleck entspricht, vorzugsweise mit abgerundeten bzw. abgeschrägten Eckbereichen, in Anlehnung an den hier vorgestellten Basisvorsprung 170 (Fig. 5) mit rechteckiger Querschnittsfläche oder in Anlehnung an die Basisvorsprünge 270a, 270b mit einer Querschnittsfläche die etwa einem Viertelkreis (Tortenstück) entspricht.

### Bezugszeichenliste

- 10, 110, 210: Impulskörpermodul
- 12, 112, 212: Aufnahmebauteil
- 14, 114, 214: Basis
- 16: Innenfläche
- 18a, 118a, 218a: Seitenwand
- 18b, 118b, 218b: Seitenwand
- 20a, 120a, 220a: Seitenwand
- 20b, 120b, 220b: Seitenwand
- 22: Querstrebe
- 24: Längsstrebe
- 26: Kreuzungsbereich
- 28: Stirnfläche
- 30: stirnseitiger Rand
- 32: Aufnahmeraum
- 34: Hohlraum
- 36: Impulskörper
- 42: Einsatzbauteil
- 44: Abschlusswand
- 46: Innenseite
- 48: Querstrebe
- 50: Längsstrebe
- 52: Kreuzungsbereich
- 54: Stirnseite
- 56: Innenrand
- 58: Außenfläche
- 62: Verschlussbauteil
- 170, 270a, 270b: Basisvorsprung
- 172, 272a, 272b: Übergangswand
- 274: Zwischenraum
- 176, 276a, 276b: Stirnfläche (freies Ende)
- H1: Höhe Basisvorsprung 270a
- H2: Höhe Basisvorsprung 270b

## Patentansprüche

1. Impulskörpermodul (10; 110; 210) für eine Strömungsmaschine, insbesondere eine Turbinenstufe einer Gasturbine, umfassend:
ein einstückig ausgebildetes Aufnahmebauteil (12; 112; 212) mit einer Basis (14; 114; 214) und an der Basis (14; 114; 214) umlaufend angeordneten Seitenwänden (18a, 18b, 20a, 20b; 118a, 118b, 120a, 120b; 218a, 218b, 220a, 220b), wobei die Seitenwände (18a, 18b, 20a, 20b; 118a, 118b, 120a, 120b; 218a, 218b, 220a, 220b) und die Basis (14; 114; 214) einen Aufnahmeraum (32; 132; 232) begrenzen,
ein einstückig ausgebildetes Einsatzbauteil (42) das in den Aufnahmeraum (32) des Aufnahmebauteils (12; 112; 212) eingesetzt ist, wobei das Aufnahmebauteil (12; 112; 212) und das darin aufgenommen Einsatzbauteil (42) derart ausgebildet sind, dass sie gemeinsam mehrere voneinander getrennte Hohlräume (34) begrenzen, und wobei in jedem Hohlraum (34) ein Impulskörper (36), insbesondere eine Kugel, aufgenommen ist, und
ein einstückig ausgebildetes Verschlussbauteil (62), das materialschlüssig mit dem Aufnahmebauteil (12; 112; 212) verbunden ist, derart dass der Aufnahmeraum (32; 132; 232) verschlossen ist und das Einsatzbauteil (42) vom Aufnahmebauteil (12; 112; 212) und dem Verschlussbauteil (62) umgeben ist,
**dadurch gekennzeichnet, dass** das Aufnahmebauteil (112; 212) im Bereich seiner Basis (114; 214) oder des Verschlussbauteils (62) wenigstens einen Basisvorsprung (170; 270a, 270b) aufweist, der sich vom Aufnahmeraum (132; 232) weg erstreckt, wobei der Basisvorsprung (170; 270a, 270b) im Wesentlichen quaderförmig ausgebildet ist mit abgerundeten Eckbereichen beim Übergang zu der Basis (114; 214) bzw. zum Verschlussbauteil (62) und beim Übergang zu seinem freien Ende (176; 276a, 276b) oder mit Eckbereichen, die als gebrochene Kanten ausgeführt sind.

2. Impulskörpermodul nach Anspruch 1, **dadurch gekennzeichnet, dass** der Basisvorsprung (170; 270a, 270b) entlang einer kurzen Seitenwand (118a; 218a) des Aufnahmebauteils (112; 212) angeordnet ist.

3. Impulskörpermodul nach einem der vorhergehenden Ansprüche, **dadurch gekennzeichnet, dass** es im Bereich von zwei Ecken des Aufnahmebauteils (212) zwei gleichartig oder unterschiedlich ausgebildete Basisvorsprünge (270a, 270b) aufweist, zwischen denen ein Freiraum (274) vorgesehen ist.

4. Impulskörpermodul nach Anspruch 3, **dadurch gekennzeichnet, dass** der eine Basisvorsprung (270b) ausgehend von der Basis (214) oder von dem Verschlussbauteil (62) eine größere Höhe (H2) aufweist als der andere Basisvorsprung (270a).

5. Impulskörpermodul nach Anspruch 3 oder 4, **dadurch gekennzeichnet, dass** der eine Basisvorsprung (270b) eine kleinere Querschnittsfläche aufweist als der andere Basisvorsprung (270a).

6. Impulskörpermodul nach einem der vorhergehenden Ansprüche, **dadurch gekennzeichnet, dass** der Basisvorsprung in einem zentralen Bereich der Basis oder des Verschlussbauteils (62) vorgesehen ist.

7. Impulskörpermodul nach einem der vorhergehenden Ansprüche, **dadurch gekennzeichnet, dass** eine Querschnittsfläche des Basisvorsprungs (170; 270a, 270b) im Wesentlichen dreieckig oder rechteckig oder vieleckig ausgebildet ist.

8. Impulskörpermodul nach einem der vorhergehenden Ansprüche, **dadurch gekennzeichnet, dass** das Aufnahmebauteil (112; 212) samt Basisvorsprung (170; 270a, 270b), das Einsatzbauteil (42) und das Verschlussbauteil (62) durch eine generatives Verfahren hergestellt sind, insbesondere durch ein selektives Laserschmelzverfahren.

9. Impulskörpermodul nach einem der Ansprüche 1 bis 7, **dadurch gekennzeichnet, dass** das Aufnahmebauteil (112; 212) samt Basisvorsprung (170; 270a, 270b) oder/und das Einsatzbauteil (42) oder/und das Verschlussbauteil (62) wenigstens teilweise durch ein abtragendes Fertigungsverfahren, wie beispielsweise elektrochemisches Abtragen, oder durch ein Metallspritzgussverfahren hergestellt ist.

10. Verfahren zur Herstellung eines Impulskörpermoduls für eine Strömungsmaschine, insbesondere für eine Turbinenstufe einer Gasturbine, umfassend die Schritte:
Herstellen eines Aufnahmebauteils (12; 112; 212) durch schichtweises Aufbauen mittels eines generativen Herstellungsverfahrens, insbesondere mittels eines selektiven Laserschmelzverfahrens, wobei das Aufnahmebauteil (12; 112; 212) eine Basis (14; 114; 214) mit wenigstens einem Basisvorsprung (170; 270a, 270b) und an der Basis (14; 114; 214) umlaufend angeordnete Seitenwände (18a, 18b, 20a, 20b; 118a, 118b, 120a, 120b; 218a, 218b, 220a, 220b) aufweist, wobei die Basis (14; 114; 214) ausgehend von dem wenigstens einen Basisvorsprung (170; 270a, 270b) aufgebaut wird und wobei die Seitenwände (18a, 18b, 20a, 20b; 118a, 118b, 120a, 120b; 218a, 218b, 220a, 220b) ausgehend von der Basis (14; 114; 214) derart aufgebaut werden, dass innerhalb der Seitenwände ein Aufnahmeraum (32; 132; 232) gebildet wird, so dass das Aufnahmebauteil (12; 112; 212) im Bereich seiner Basis (14; 114; 214) den Basisvorsprung (170; 270a, 270b) aufweist, der sich vom Aufnahmeraum (32; 132; 232) weg erstreckt, und
wobei der Basisvorsprung (170; 270a, 270b) im Wesentlichen quaderförmig aufgebaut wird mit abgerundeten Eckbereichen beim Übergang zu der Basis (114; 214) und beim Übergang zu seinem freien Ende (176; 276a, 276b) oder mit Eckbereichen, die als gebrochene Kanten ausgeführt sind;
Herstellen eines wenigstens abschnittsweise gitterartigen Einsatzbauteils (42) durch schichtweises Aufbauen mittels eines generativen Herstellungsverfahrens, insbesondere mittels eines selektiven Laserschmelzverfahrens;
Einsetzen des Einsatzbauteils (42) in den Aufnahmeraum (32; 132; 232) des Aufnahmebauteils (12; 112; 212), wobei vor dem Einsetzen oder beim Einsetzen Impulskörper (36), insbesondere Kugeln, in Hohlräume (34) eingesetzt werden, die gemeinsam durch das Aufnahmebauteil (12; 112; 212) und das Einsatzbauteil (42) gebildet werden;
Schichtweises Aufbauen auf dem Aufnahmebauteil (12; 112; 212) mit eingesetzten Einsatzbauteil (42) eines Verschlussbauteils (62) mittels eines generativen Herstellungsverfahrens, insbesondere mittels eines selektiven Laserschmelzverfahrens, so dass das Aufnahmebauteil (12; 112; 212) und das Verschlussbauteil (62) materialschlüssig miteinander verbunden sind und eine einstückige Umhüllung für das Einsatzbauteil (42) und die aufgenommenen Impulskörper (36) bilden.

11. Schaufelanordnung einer Verdichterstufe oder einer Turbinenstufe einer Gasturbine, **dadurch gekennzeichnet, dass** die Schaufelanordnung eine Vertiefung aufweist, in die ein Impulskörpermodul (10; 110; 210) nach einem der Ansprüche 1 bis 9 eingesetzt ist, wobei die Vertiefung vorzugsweise in einem Laufschaufelfußbereich oder einem Leitschaufelfußbereich vorgesehen ist.

12. Schaufelanordnung nach Anspruch 11, **dadurch gekennzeichnet, dass** der Basisvorsprung (170; 270a, 270b) eine Form aufweist, die komplementär zu einer Vertiefung in der Schaufelanordnung ausgebildet ist.

13. Gasturbine, insbesondere Fluggasturbine, umfassend mehrere Verdichterstufen und mehrere Turbinenstufen, **dadurch gekennzeichnet, dass** sie wenigstens ein Impulskörpermodul (10; 110; 210) nach einem der Ansprüche 1 bis 9 aufweist, das einer Verdichterstufe oder einer Turbinenstufe zugeordnet ist.

## Claims

1. Impulse body module (10; 110; 210) for a turbomachine, in particular a turbine stage of a gas turbine, comprising:
a receiving component (12; 112; 212) which is formed as one piece and has a base (14; 114; 214) and lateral walls (18a, 18b, 20a, 20b; 118a, 118b, 120a, 120b; 218a, 218b, 220a, 220b) which are arranged peripherally on the base (14; 114; 214), the lateral walls (18a, 18b, 20a, 20b; 118a, 118b, 120a, 120b; 218a, 218b, 220a, 220b) and the base (14; 114; 214) delimiting a receiving space (32; 132; 232),
an insert component (42) which is formed as one piece and is inserted into the receiving space (32) of the receiving component (12; 112; 212), the receiving component (12; 112; 212) and the insert component (42) received therein being formed in such a way that together they delimit a plurality of mutually separated hollow spaces (34), and an impulse body module (36), in particular a sphere, being received in each hollow space (34), and
a closing component (62) which is formed as one piece and is integrally joined to the receiving component (12; 112; 212) such that the receiving space (32; 132; 232) is closed and the insert component (42) is enclosed by the receiving component (12; 112; 212) and the closing component (62),
**characterized in that** the receiving component (112; 212) has at least one base projection (170; 270a, 270b) in the region of the base (114; 214) thereof or the closing component (62), which projection extends away from the receiving space (132; 232), the base projection (170; 270a, 270b) being substantially cuboid and having rounded corner regions at the transition to the base (114; 214) or closing component (62) and at the transition to the free end thereof (176; 276a, 276b), or having corner regions which are designed as chamfered edges.

2. Impulse body module according to claim 1, **characterized in that** the base projection (170; 270a, 270b) is arranged along a short lateral wall (118a; 218a) of the receiving component (112; 212).

3. Impulse body module according to either of the preceding claims, **characterized in that** it has two similarly or differently formed base projections (270a, 270b) in the region of two corners of the receiving component (212), between which base projections a free space (274) is provided.

4. Impulse body module according to claim 3, **characterized in that** one base projection (270b), starting from the base (214) or from the closing component (62), has a greater height (H2) than the other base projection (270a).

5. Impulse body module according to either claim 3 or claim 4, **characterized in that** one base projection (270b) has a smaller cross-sectional area than the other base projection (270a).

6. Impulse body module according to any of the preceding claims, **characterized in that** the base projection is provided in a central region of the base or the closing component (62).

7. Impulse body module according to any of the preceding claims, **characterized in that** a cross-sectional area of the base projection (170; 270a, 270b) is substantially triangular or rectangular or polygonal.

8. Impulse body module according to any of the preceding claims, **characterized in that** the receiving component (112; 212) together with the base projection (170; 270a, 270b), the insert component (42) and the closing component (62) are produced by a rapid manufacturing method, in particular by a selective laser melting method.

9. Impulse body module according to any of claims 1 to 7, **characterized in that** the receiving component (112; 212) together with the base projection (170; 270a, 270b) and/or the insert component (42) and/or the closing component (62) are produced at least partly by a material-removing manufacturing method, such as electrochemical machining, or by a metal injection molding method.

10. Method for producing an impulse body module for a turbomachine, in particular for a turbine stage of a gas turbine, comprising the steps of:
producing a receiving component (12; 112; 212) by layered construction using a rapid manufacturing method, in particular using a selective laser melting method, wherein the receiving component (12; 112; 212) comprises a base (14; 114; 214) which has at least one base projection (170; 270a, 270b) and lateral walls (18a, 18b, 20a, 20b; 118a, 118b, 120a, 120b; 218a, 218b, 220a, 220b) which are arranged peripherally on the base (14; 114; 214), wherein the base (14; 114; 214) is constructed starting from the at least one base projection (170; 270a, 270b), and wherein the lateral walls (18a, 18b, 20a, 20b; 118a, 118b, 120a, 120b; 218a, 218b, 220a, 220b) are constructed starting from the base (14; 114; 214) in such a way that a receiving space (32; 132; 232) is formed within the lateral walls so that the receiving component (12; 112; 212) has the base projection (170; 270a, 270b) in the region of the base (14; 114; 214) thereof, which projection extends away from the receiving space (32; 132; 232), and
wherein the base projection (170; 270a, 270b) is constructed so as to be substantially cuboid having rounded corner regions at the transition to the base (114; 214) and at the transition to the free end (176; 276a, 276b) thereof or having corner portions which are designed as chamfered edges;
producing an at least partly lattice-like insert component (42) by layered construction using a rapid manufacturing method, in particular using a selective laser melting method;
inserting the insert component (42) into the receiving space (32; 132; 232) of the receiving component (12; 112; 212), wherein, before insertion or during insertion, impulse bodies (36), in particular spheres, are inserted into hollow spaces (34) which are formed by the receiving component (12; 112; 212) and the insert component (42) together;
constructing, in layers, a closing component (62) on the receiving component (12; 112; 212) with the inserted insert component (42) using a rapid manufacturing method, in particular using a selective laser melting method, such that the receiving component (12; 112; 212) and the closing component (62) are integrally joined to one another and form an enclosure as one piece for the insert component (42) and the received impulse bodies (36).

11. Blade arrangement of a compressor stage or a turbine stage of a gas turbine, **characterized in that** the blade arrangement has a recess into which an impulse body module (10; 110; 210) according to any of claims 1 to 9 is inserted, the recess preferably being provided in a rotor blade base region or a stator blade base region.

12. Blade arrangement according to claim 11, **characterized in that** the base projection (170; 270a, 270b) has a shape that is complementary to a recess in the blade arrangement.

13. Gas turbine, in particular a gas turbine for an aircraft, comprising a plurality of compressor stages and a plurality of turbine stages, **characterized in that** it comprises at least one impulse body module (10; 110; 210) according to any of claims 1 to 9 which is associated with a compressor stage or a turbine stage.

## Revendications

1. Module de corps d'impulsion (10 ; 110 ; 210) pour une turbomachine, en particulier un étage de turbine d'une turbine à gaz, comprenant :
un composant de réception formé en une seule pièce (12 ; 112 ; 212) avec une base (14 ; 114 ; 214) et des parois latérales (18a, 18b, 20a, 20b ; 118a, 118b, 120a, 120b ; 218a, 218b, 220a, 220b) disposées circonférentiellement sur la base (14 ; 114 ; 214), les parois latérales (18a, 18b, 20a, 20b; 118a, 118b, 120a, 120b ; 218a, 218b, 220a, 220b) et la base (14; 114; 214) délimitent un espace de réception (32 ; 132 ; 232),
un composant d'insertion formé en une seule pièce (42), lequel est inséré dans l'espace de réception (32) du composant de réception (12 ; 112 ; 212), le composant de réception (12 ; 112 ; 212) et le composant d'insertion (42) logé dans celui-ci étant conçus de telle sorte qu'ils délimitent conjointement plusieurs cavités (34) séparées les unes des autres, et un corps d'impulsion (36), notamment une bille, étant logé dans chaque cavité (34), et
un composant de fermeture formé en une seule pièce (62), lequel est relié au composant de réception (12 ; 112 ; 212) par liaison de matière, de telle sorte que l'espace de réception (32 ; 132 ; 232) est fermé et le composant d'insertion (42) est entouré par le composant de réception (12 ; 112 ; 212) et le composant de fermeture (62),
**caractérisé en ce que** le composant de réception (112 ; 212) comporte au moins une saillie de base (170 ; 270a, 270b) au niveau de sa base (114 ; 214) ou du composant de fermeture (62), ladite saillie de base s'étendant loin de l'espace de réception (132 ; 232), la saillie de base (170 ; 270a, 270b) étant essentiellement parallélépipédique avec des régions de coin arrondies à la transition vers la base (114 ; 214) ou vers le composant fermeture (62) et à la transition vers son extrémité libre (176 ; 276a, 276b) ou avec des régions de coin qui sont conçues comme bords cassés.

2. Module de corps d'impulsion selon la revendication 1, **caractérisé en ce que** la saillie de base (170 ; 270a, 270b) est disposée le long d'une courte paroi latérale (118a ; 218a) du composant de réception (112 ; 212).

3. Module de corps d'impulsion selon l'une des revendications précédentes, **caractérisé en ce qu'**il présente deux saillies de base (270a, 270b) de conception identique ou différente dans la région de deux coins du composant de réception (212), entre lesquelles est prévu un espace libre (274).

4. Module de corps d'impulsion selon la revendication 3, **caractérisé en ce qu'**une saillie de base (270b) a une hauteur (H2) supérieure à celle de l'autre saillie de base (270a) à partir de la base (214) ou du composant de fermeture (62).

5. Module de corps d'impulsion selon la revendication 3 ou 4, **caractérisé en ce qu'**une saillie de base (270b) a une surface de section transversale plus petite que l'autre saillie de base (270a).

6. Module de corps d'impulsion selon l'une des revendications précédentes, **caractérisé en ce que** la saillie de base est prévue dans une région centrale du composant de base ou de fermeture (62).

7. Module de corps d'impulsion selon l'une des revendications précédentes, **caractérisé en ce qu'**une section transversale de la saillie de base (170 ; 270a, 270b) est de forme sensiblement triangulaire, rectangulaire ou polygonale.

8. Module de corps d'impulsion selon l'une des revendications précédentes, **caractérisé en ce que** le composant de réception (112 ; 212) ainsi que la saillie de base (170 ; 270a, 270b), le composant d'insertion (42) et le composant de fermeture (62) sont fabriqués par un procédé générateur, en particulier par un procédé sélectif de fusion par laser.

9. Module de corps d'impulsion selon l'une des revendications 1 à 7, **caractérisé en ce que** le composant de réception (112 ; 212) ainsi que la saillie de base (170 ; 270a, 270b) et/ou le composant d'insertion (42) et/ou le composant de fermeture (62) sont fabriqués au moins partiellement par un procédé de fabrication par ablation, tel qu'une ablation électrochimique, ou par un procédé de moulage par injection métallique.

10. Procédé de fabrication d'un module de corps d'impulsion pour une turbomachine, en particulier pour un étage de turbine d'une turbine à gaz, comprenant les étapes suivantes :
fabrication d'un composant de réception (12 ; 112 ; 212) par stratification de couches au moyen d'un procédé de fabrication générateur, en particulier par un procédé sélectif de fusion par laser, le composant de réception (12 ; 112 ; 212) comportant une base (14 ; 114 ; 214) présentant au moins une saillie de base (170 ; 270a, 270b) et des parois latérales (18a, 18b, 20a, 20b ; 118a, 118b, 120a, 120b ; 218a, 218b, 220a, 220b) disposées circonférentiellement sur la base (14 ; 114 ; 214), la base (14 ; 114 ; 214) étant réalisée à partir de ladite au moins une saillie de base (170 ; 270a, 270b), et lesdites parois latérales (18a, 18b, 20a, 20b ; 118a, 118b, 120a, 120b ; 218a, 218b, 220a, 220b) étant réalisées à partir de ladite base (14, 114) ; 214), de telle sorte qu'un espace de réception (32 ; 132 ; 232) est formé à l'intérieur des parois latérales de manière à ce que le composant de réception (12 ; 112 ; 212) présente la saillie de base (170 ; 270a, 270b) dans la région de sa base (14 ; 114 ; 214), laquelle saillie s'étend loin de l'espace de réception (32 ; 132 ; 232), et
la saillie de base (170 ; 270a, 270b) étant réalisée de façon sensiblement parallélépipédique avec des régions de coin arrondies à la transition vers la base (114 ; 214) et à la transition vers son extrémité libre (176 ; 276a, 276b) ou avec des régions de coin qui sont conçues comme des bords cassés ;
fabrication d'une pièce d'insertion (42) au moins partiellement en forme de grille, par stratification de couches au moyen d'un procédé de fabrication générateur, en particulier au moyen d'un procédé sélectif de fusion par laser ;
insertion du composant d'insertion (42) dans l'espace de réception (32 ; 132 ; 232) du composant de réception (12 ; 112 ; 212), des corps d'impulsion (36), en particulier des billes, étant insérés dans des cavités (34) formées conjointement par le composant de réception (12 ; 112 ; 212) et le composant d'insertion (42), avant l'insertion ou pendant l'insertion ;
stratification de couches sur le composant de réception (12 ; 112 ; 212) avec le composant d'insertion inséré (42) d'un composant de fermeture (62) au moyen d'un procédé de fabrication générateur, en particulier au moyen d'un procédé sélectif de fusion par laser, de telle sorte que le composant de réception (12 ; 112 ; 212) et le composant de fermeture (62) sont reliés par liaison de matière et forment une enveloppe en une seule pièce pour le composant d'insertion (42) et les corps d'impulsions logés (36).

11. Ensemble d'aubes d'un étage de compresseur ou d'un étage de turbine d'une turbine à gaz, **caractérisé en ce que** l'ensemble d'aubes présente un évidement dans lequel est inséré un module de corps d'impulsion (10 ; 110 ; 210) selon l'une des revendications 1 à 9, l'évidement étant de préférence prévu dans une région de base d'aubes de rotor ou dans une région de base d'aubes directrices.

12. Ensemble d'aubes selon la revendication 11, **caractérisé en ce que** la saillie de base (170 ; 270a, 270b) présente une forme complémentaire d'un évidement dans l'ensemble d'aubes.

13. Turbine à gaz, en particulier turbine à gaz d'avion, comprenant plusieurs étages de compresseur et plusieurs étages de turbine, **caractérisée en ce qu'**elle présente au moins un module de corps d'impulsion (10 ; 110 ; 210) selon l'une des revendications 1 à 9, lequel module de corps d'impulsion est associé à un étage de compresseur ou un étage de turbine.
